## Europäisches Patentamt
## European Patent Office
## Office européen des brevets

(19)

(11) Numéro de publication: **0 272 173**
**B1**

(12)

# FASCICULE DE BREVET EUROPEEN

(45) Date de publication du fascicule du brevet:
**25.04.90**

(51) Int. Cl.⁴: **F16B 37/04**

(21) Numéro de dépôt: **87402545.5**

(22) Date de dépôt: **10.11.87**

(54) **Ecrou encagé flottant.**

(30) Priorité: **12.11.86  FR 8615704**

(43) Date de publication de la demande:
**22.06.88 Bulletin 88/25**

(45) Mention de la délivrance du brevet:
**25.04.90 Bulletin 90/17**

(84) Etats contractants désignés:
**DE GB**

(56) Documents cités:
**GB-A- 492 686**
**GB-A- 532 830**
**US-A- 2 381 233**

(73) Titulaire: **SIMMONDS S.A., 5 rue Michelet,
F-92152 Suresnes Cédex(FR)**

(72) Inventeur: **Baglin, Michel, 7 rue Anatole France,
F-72600 Mamers(FR)**

(74) Mandataire: **Durand, Yves Armand Louis et al, Cabinet Z.
Weinstein 20, Avenue de Friedland, F-75008 Paris(FR)**

## Description

La présente invention a essentiellement pour objet un écrou encagé flottant.

On connaît déjà d'après le document US-A 2 381 233 des écrous qui sont montés flottants dans un support en forme de cage dont les côtés sont pourvus d'ouvertures dans lesquelles peut se débattre une embase faisant partie de l'écrou et retenue dans la cage grâce à des languettes découpées et faisant saillie du fond de la cage.

Toutefois, ce genre de montage, présente un certain nombre d'inconvénients. En effet, le montage de l'écrou dans sa cage est définitif et on ne peut pas démonter l'écrou de sa cage pour le remplacer s'il est endommagé.

C'est l'ensemble écrou-cage qui doit être remplacé, ce qui est coûteux et gênant dans de nombreux cas. En outre, dans le cas d'un assemblage de pièces en rotation et/ou en vibration, l'ensemble cage-écrou peut ne pas résister aux sollicitations qu'il subit et se dissocier.

La présente invention a pour but de proposer un écrou encagé flottant qui remédie aux inconvénients ci-dessus.

A cet effet, l'invention a pour objet un écrou encagé flottant du type comprenant une cage dont les côtés sont pourvus d'ouvertures dans lesquelles peut se débattre l'embase d'un écrou qui peut être retenu dans la cage grâce à des languettes, caractérisé en ce que lesdites languettes appartiennent à une platine retenue dans les ouvertures des côtés de la cage et interposée entre le fond de cette cage et l'embase d'écrou.

Suivant une autre caractéristique de l'invention, les languettes précitées sont situées sur deux bords opposés de la platine et sont orientées sensiblement verticalement par rapport au plan de cette platine.

L'une et/ou l'autre de ces languettes pourra être dépliée vers l'extérieur pour permettre de dégager l'écrou de la cage. Il suffira alors de retirer la platine et l'écrou de la cage et de les remplacer par un nouvel ensemble écrou-platine, étant entendu que la platine précédemment retirée de la cage est éventuellement réutilisable. On comprend donc que les languettes repliables constituent un moyen simple et efficace permettant un démontage et un montage sûrs de l'écrou.

Suivant une autre caractéristique de l'invention, la platine et l'embase d'écrou comportent sur leurs deux bords opposés faisant face aux côtés de la cage, des pattes latérales s'engageant dans les ouvertures de ces côtés.

On précisera encore ici que chaque côté de la cage comporte, de part et d'autre d'un plan transversal médian, deux ouvertures débouchant par une découpe vers l'extérieur des côtés de cette cage.

La découpe permettra l'introduction de l'écrou dans sa cage.

Selon encore une autre caractéristique de l'invention, la distance entre les deux languettes repliables est légèrement plus grande que la distance entre les deux bords opposés de l'embase d'écrou coopérant avec lesdites languettes.

La cage d'écrou peut être solidaire par son fond d'un support quelconque, tel que par exemple une bande, comportant d'autres écrous encagés flottants.

Mais d'autres caractéristiques et avantages de l'invention apparaîtront mieux dans la description détaillée qui suit et se réfère aux dessins annexés, donnés uniquement à titre d'exemple, et dans lesquels:

Les figures 1, 2 et 3 sont respectivement des vues en plan de dessus de la cage d'écrou, de la platine et de l'écrou proprement dit ;

La figure 4 est une vue en plan de dessus des trois éléments ci-dessus en position montée et formant l'écrou encagé flottant selon l'invention, et

La figure 5 est une vue schématique et en perspective de l'écrou encagé.

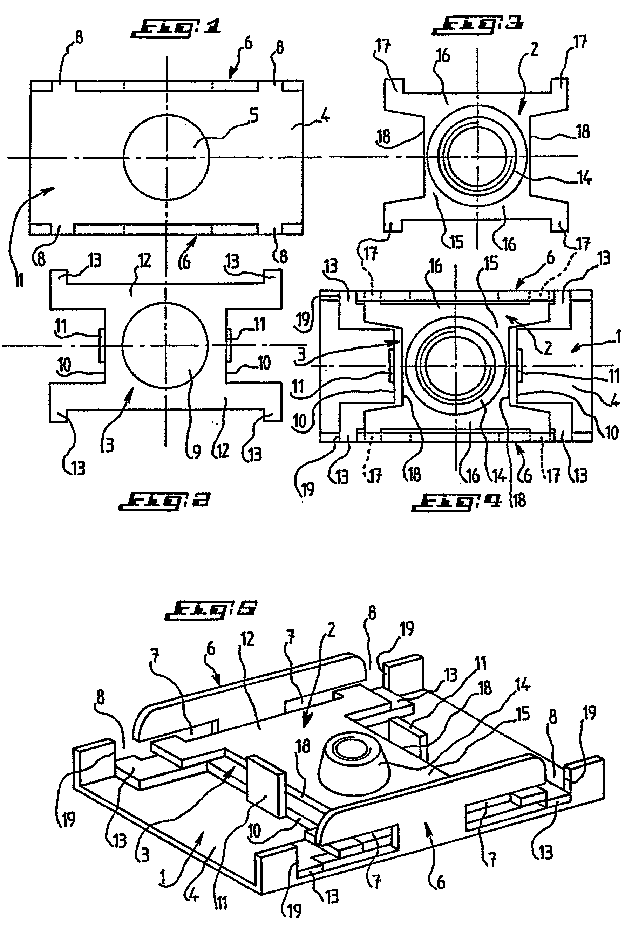

En se reportant aux dessins, on voit qu'un écrou encagé flottant conforme aux principes de l'invention comprend essentiellement une cage 1, un écrou 2 et une platine 3 interposée entre la cage 1 et l'écrou 2.

La cage 1 comporte un fond 4 muni d'un orifice 5 permettant le passage d'un élément fileté, ainsi que des côtés opposés 6. La cage 1 présente en section transversale sensiblement la forme d'un U comme on le voit bien sur la figure 5.

Comme on le voit mieux sur cette figure 5, les côtés 6 comportent chacun, de part et d'autre d'un plan transversal médian, deux ouvertures 7 avec une découpe 8, de sorte que les ouvertures 7 débouchent vers l'extérieur des côtés 6 de la cage.

La platine 3 qui vient s'appliquer sur le fond 4 de la cage 1 comporte un orifice 9 pour le passage de l'élément fileté (non représenté), ainsi que deux bords opposés 10 comportant chacun une languette repliable 11 prenant naissance sur lesdits bords.

Les deux autres bords opposés 12 de la platine 3 comportent chacun des pattes latérales 13 s'engageant dans les ouvertures 7 prévues sur chaque côté 6 de la cage 1, comme on le voit bien sur la figure 5.

L'écrou 2 comporte un fût taraudé 14 associé à une embase 15. Cette embase 15 comprend deux bords opposés 16 munis chacun de pattes latérales 17 faisant saillie vers l'extérieur de l'embase 15 et pouvant s'engager dans les ouvertures 7 ménagées dans les deux côtés 6 de la cage 1.

Comme on le voit bien sur la figure 5, les bords opposés 12 et 16 de la platine 3 et de l'embase d'écrou 15 font face aux côtés opposés 6 de la cage 1, de sorte que les pattes 13 et 17 s'engagent dans les ouvertures 7 des côtés 6 de la cage grâce aux découpes 8.

Comme il apparaît clairement sur la figure 5, les languettes 11 de la platine 3 sont orientées sensiblement verticalement par rapport au plan de cette platine lorsque l'écrou 2 est en position montée dans la cage 1. On voit également sur la figure 5 et aussi sur la figure 4, que la distance entre les languettes 11 est légèrement plus grande que la distance entre les deux bords opposés 18 de l'embase 15 d'écrou 2 coopérant avec lesdites languettes.

Ainsi, lorsque l'écrou 2 est en position montée dans sa cage, ledit écrou pourra se débattre dans la cage, au-dessus de la platine 3, suivant un plan sensiblement horizontal. En outre, l'écrou 2 pourra se débattre dans la cage suivant une direction sensiblement verticale par le fait que les pattes 17 de l'embase d'écrou 15 pourront se débattre verticalement dans les ouvertures 7 ménagées dans les côtés 6 de la cage 1. On comprend donc que, de cette façon, l'écrou 2 est monté flottant dans la cage 1 grâce aux languettes 1 de la platine 3 et aux ouvertures 7 des côtés 6 de la cage.

On remarquera encore ici que la platine 3 est immobilisée en translation horizontale dans la cage 1, par le fait que les pattes latérales 13 de ladite platine viennent buter, comme on le voit sur la figure 5, sur un bord 19 des ouvertures 7.

L'écrou encagé qui vient d'être décrit peut être utilisé à l'unité pour réaliser des assemblages quelconques. Ou bien, on peut utiliser une pluralité de tels écrous encagés montés sur un support quelconque, tel que par exemple une bande solidaire du fond 4 de la cage 1.

Mais on décrira maintenant plus en détail comment s'effectuent le montage de l'écrou 2 dans sa cage 1, et le démontage de cet écrou pour pouvoir le remplacer par un nouvel écrou.

On place tout d'abord la platine 3 sur le fond 4 de la cage 1, l'une des pattes 11 étant pliée perpendiculairement à la platine, et l'autre patte 11 ayant été préalablement pliée suivant un angle obtus par rapport à la platine 3. L'introduction de la platine dans la cage est rendue possible par le passage des pattes latérales 13 de la platine 3 dans la découpe 8 ménagée dans les côtés 6 de la cage.

L'écrou 2 peut alors être introduit dans la cage 1 par passage de deux pattes 17 au travers de deux découpes opposées 8, ce après quoi on translate l'écrou avec divers mouvements d'inclinaison dans la cage, de sorte que toutes les pattes 17 sont logées dans les ouvertures 7. L'embase 15 est alors appliquée sur la platine 3, et on plie vers le haut perpendiculairement au plan de la platine 3, la patte 11 préalablement pliée suivant un angle obtus, pour finalement obtenir l'écrou encagé flottant visible sur la figure 5.

On a donc réalisé suivant l'invention un écrou encagé flottant comportant un écrou qui peut être facilement monté et démonté par simple pliage ou dépliage des languettes 11 qui assurent toujours un montage nécessairement correct de l'écrou dans sa cage, c'est-à-dire un montage qui, en aucun cas, ne permettra à la platine de s'échapper.

## Revendications

1. Ecrou encagé flottant du type comprenant une cage (1) dont les côtés (6) sont pourvus d'ouvertures (7) dans lesquelles peut se débattre l'embase (15) d'un écrou (2) qui peut être retenu dans la cage grâce à des languettes (11), caractérisé en ce que lesdites languettes (11) appartiennent à une platine (3) retenue dans les ouvertures (7) des côtés (6) de la cage et interposée entre le fond (4) de cette cage et l'embase d'écrou (15).

2. Ecrou selon la revendication 1, caractérisé en ce que les languettes précitées (11) sont situées sur deux bords opposés (10) de la platine (3) et sont orientées sensiblement verticalement par rapport au plan de cette platine.

3. Ecrou selon la revendication 1 ou 2, caractérisé en ce que la platine (3) et l'embase d'écrou (15) comportent sur leurs deux bords opposés (12, 16) faisant face aux côtés (6) de la cage des pattes latérales (13, 17) s'engageant dans les ouvertures (7) de ces côtés.

4. Ecrou selon l'une des revendications 1 à 3, caractérisé en ce que chaque côté (6) de la cage (1) comporte, de part et d'autre d'un plan transversal médian, deux ouvertures (7) débouchant par une découpe (8) vers l'extérieur des côtés de cette cage.

5. Ecrou selon l'une des revendications 2–4 caractérisé en ce que la distance entre les deux languettes repliables (11) est légèrement plus grande que la distance entre les deux bords opposés (18) de l'embase d'écrou (15) coopérant avec lesdites languettes.

6. Ecrou selon l'une des revendications précédentes, caractérisé en ce que la cage (1) est solidaire par son fond (4) d'un support quelconque, tel que par exemple une bande, comportant d'autres écrous encagés flottants.

## Patentansprüche

1. Schwingbare Käfigmutter der Gattung mit einem Käfig (1) dessen Seiten (6) mit Öffnungen (7) versehen sind, in welchen sich der Ansatz (15) einer Mutter (2), die in dem Käfig durch Lappen (11) zurückgehalten werden kann, bewegen kann, dadurch gekennzeichnet, dass die besagten Lappen (11) zu einem, in den Öffnungen (7) der Seiten (6) des Käfigs zurückgehaltenen und zwischen dem Boden (4) dieses Käfigs und dem Mutteransatz (15) angeordneten Plättchen (3) gehören.

2. Mutter nach Anspruch 1, dadurch gekennzeichnet, dass die vorgenannten Lappen (11) an beiden entgegengesetzten Rändern (10) des Plättchens (3) liegen und im wesentlichen senkrecht in bezug auf die Ebene dieses Plättchens ausgerichtet sind.

3. Mutter nach Anspruch 1 oder 2, dadurch gekennzeichnet, dass das Plättchen (3) und der Mutteransatz (15) an ihren beiden, den Seiten (6) des Käfigs zugewandten, entgegengesetzten Rändern (12, 16) in die Öffnungen (7) dieser Seiten eingreifende Seitenknaggen (13, 17) aufweisen.

4. Mutter nach einem der Ansprüche 1 bis 3, dadurch gekennzeichnet, dass jede Seite (6) des Käfigs (1) beiderseits eine Quermittelebene zwei durch einen Ausschnitt (8) nach aussen der Seiten dieses Käfigs mündende Öffnungen (7) aufweist.

5. Mutter nach einem der Ansprüche 2 bis 4, dadurch gekennzeichnet, dass die Entfernung zwischen den beiden zurückfaltbaren Lappen (11) etwas grösser ist, als die Entfernung zwischen den beiden entgegengesetzten Rändern (18) des mit den besagten Lappen zusammenwirkenden Mutteransatzes (15).

6. Mutter nach einem der vorangehenden Ansprüche, dadurch gekennzeichnet, dass der Käfig (1) durch seinen Boden (4) mit irgendeinem Halter wie zum Beispiel einem andere schwenkbare Käfigmutter aufweisenden Streifen fest verbunden ist.

## Claims

1. Floating caged nut of the type comprising a cage (1) the sides (6) of which are provided with openings (7) in which is movable the base flange (15) of a nut (2) which may be retained within the cage owing to tabs (11), characterized in that the said tabs (11) belong to a plate (3) retained in the openings (7) of the sides (6) of the cage and interposed between the bottom (4) of this cage and the nut base flange (15).

2. Nut according to claim 1, characterized in that the aforesaid tabs (11) are located on two opposite edges (10) of the plate (3) and are oriented substantially vertically with respect to the plane of this plate.

3. Nut according to claim 1 or 2, characterized in that the plate (3) and the nut base flange (15) comprise, on their two opposite edges (12, 16) facing the sides (6) of the cage, side lugs (13, 17) extending into the openings (7) of these sides.

4. Nut according to one of claims 1 to 3, characterized in that each side (6) of the cage (1) comprises, on either side of a transverse middle plane, two openings (7) opening through a cutout (8) outwards of the sides of this cage.

5. Nut according to one of claims 2 to 4, characterized in that the distance between both foldable tabs (11) is slightly greater than the distance between both opposite edges (18) of the nut base flange (15) co-operating with the said tabs.

6. Nut according to one of the foregoing claims, characterized in that the cage (1) is solid through its bottom (4) with a support whatsoever, such for instance as a strip comprising other floating caged nuts.

Fig:1

Fig:2

Fig:3

Fig:4

Fig:5